(19) Europäisches Patentamt
European Patent Office
Office européen des brevets

(11) **EP 4 411 868 A1**

(12) **EUROPEAN PATENT APPLICATION**
published in accordance with Art. 153(4) EPC

(43) Date of publication:
**07.08.2024 Bulletin 2024/32**

(21) Application number: **22875965.0**

(22) Date of filing: **21.09.2022**

(51) International Patent Classification (IPC):
*H01M 4/133* (2010.01)    *H01M 4/13* (2010.01)
*H01M 4/134* (2010.01)    *H01M 4/36* (2006.01)
*H01M 4/62* (2006.01)

(52) Cooperative Patent Classification (CPC):
**H01M 4/13; H01M 4/133; H01M 4/134; H01M 4/36;
H01M 4/62;** Y02E 60/10

(86) International application number:
**PCT/JP2022/035117**

(87) International publication number:
**WO 2023/054098 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021162319**

(71) Applicant: **Panasonic Intellectual Property
Management Co., Ltd.
Osaka-shi, Osaka 540-6207 (JP)**

(72) Inventors:
• **SOGA, Masahiro
Kadoma-shi, Osaka 571-0057 (JP)**
• **YAMAMOTO, Norihisa
Kadoma-shi, Osaka 571-0057 (JP)**
• **SATO, Naomichi
Kadoma-shi, Osaka 571-0057 (JP)**

(74) Representative: **Novagraaf International SA
Chemin de l'Echo 3
1213 Onex, Geneva (CH)**

(54) **NEGATIVE ELECTRODE FOR SECONDARY BATTERY, AND SECONDARY BATTERY**

(57) An electrode for secondary batteries according to one example of an embodiment is provided with a core body and a mixture layer that is formed on the core body. The mixture layer includes a first mixture layer and a second mixture layer disposed on the first mixture layer, and contains graphite and silicon material as active materials, and the content of the silicon material is greater than or equal to 0.5 % by mass with respect to the active material. The ratio ($\tau_2/\tau_1$) of the tortuosity factor ($\tau 2$) of the second mixture layer to the tortuosity factor ($\tau 1$) of the first mixture layer is less than 1.1.

Figure 2

EP 4 411 868 A1

**Description**

TECHNICAL FIELD

The present disclosure generally relates to a negative electrode for a secondary battery, and a secondary battery including the negative electrode.

BACKGROUND ART

A secondary battery such as a lithium ion battery is applied to in-vehicle use, use in a power storage, and the like, and is required to have improved battery performance such as high energy density, rapid-charge performance, and good cycle characteristics. Since an electrode as a main component of the battery largely affects the battery performance, many studies have been made on the electrode. For example, PATENT LITERATURE 1 discloses a lithium ion secondary battery that comprises a positive electrode including a positive electrode mixture layer having a pore tortuosity of greater than or equal to 7 and less than or equal to 60 as measured by a mercury porosimeter. PATENT LITERATURE 1 describes the effect that good rate characteristics are exerted by using the positive electrode.

CITATION LIST

PATENT LITERATURE

PATENT LITERATURE 1: International Publication No. WO 2019/003835

SUMMARY

TECHNICAL PROBLEM

However, when the tortuosity of the mixture layer is reduced, the rate characteristics of the battery are improved, but adhesion between active material particles decreases, and the active material particles are isolated from a conductive path of the mixture layer, which leads to degradation of the cycle characteristics. In particular, when a silicon material having a large volume change associated with charging and discharging is used as a negative electrode active material, disconnection of conductive paths readily occurs.

It is an advantage of the present disclosure to improve cycle characteristics at the time of high-rate charging and discharging in a negative electrode for a secondary battery in which a silicon material is used as a negative electrode active material.

SOLUTION TO PROBLEM

A negative electrode for a secondary battery according to the present disclosure comprises a core, and a mixture layer formed on the core, wherein the mixture layer includes a first mixture layer, and a second mixture layer disposed on the first mixture layer, and contains graphite and a silicon material as an active material, and a content of the silicon material is greater than or equal to 0.5% by mass, and a ratio ($\tau_2/\tau_1$) of a tortuosity ($\tau_2$) of the second mixture layer to a tortuosity ($\tau_1$) of the first mixture layer is less than 1.1.

A secondary battery according to the present disclosure comprises the above-described electrode, and an electrolyte.

ADVANTAGEOUS EFFECTS OF INVENTION

According to the negative electrode for a secondary battery according to the present disclosure, cycle characteristics at the time of high-rate charging and discharging can be improved in the negative electrode for a secondary battery in which a silicon material is used as a negative electrode active material. The secondary battery according to the present disclosure has, for example, a high energy density, and excellent rapid-charge performance and cycle characteristics.

BRIEF DESCRIPTION OF DRAWING

FIG. 1 is a sectional view of a non-aqueous electrolyte secondary battery, which is one example of an embodiment.
FIG. 2 is a sectional view of an electrode assembly, which is one example of an embodiment.

DESCRIPTION OF EMBODIMENTS

The present inventors have found that the cycle characteristics at the time of high-rate charging and discharging can be greatly improved by making a negative electrode mixture layer have a multi-layer structure, and making a ratio of a tortuosity of a second mixture layer on a surface side of a mixture layer to a tortuosity of a first mixture layer on a core side be less than 1.1. A negative electrode is produced so that a ratio $(\tau_2/\tau_1)$ of a tortuosity $(\tau_2)$ of the second mixture layer to a tortuosity $(\tau_1)$ of the first mixture layer preferably satisfies a relationship $0.3 \leq (\tau_2/\tau_1) < 1$. Using such a negative electrode enables a secondary battery with a high energy density in which a silicon material is used as a negative electrode active material to achieve good cycle characteristics at the time of high-rate charging and discharging.

The tortuosity of the mixture layer is an index indicating a winding degree of a void (pore) through which an electrolyte passes, the void being formed in the mixture layer, and means that the smaller the tortuosity is, the lower the winding of a path of the void is. The tortuosity is a value obtained by dividing a distance (path length) between a start point and a finish point of the void in the mixture layer by a straight linear distance between the start point and the finish point of the void in the mixture layer. When the path length is equal to the straight linear distance between the start point and the finish point of the void in the mixture layer, the tortuosity is 1.

The present inventors have found that the influence of the tortuosity of the second mixture layer on the high-rate charging and discharging performance is dominant compared with the first mixture layer. On the basis of this finding, the present inventors have succeeded in developing a high-function electrode having a multi-layer structure in which the tortuosity of the first mixture layer is increased to increase the packing density of the active material particles, and the tortuosity of the second mixture layer is decreased to improve the high-rate charging and discharging performance.

Hereinafter, one example of an embodiment of a negative electrode for a secondary battery and a secondary battery including the negative electrode according to the present disclosure will be described in detail with reference to the drawings. It should be noted that a configuration obtained by selectively combining constituent elements of multiple embodiments and modified examples described below is included in the scope of the present disclosure.

Hereinafter, a cylindrical battery in which a wound-type electrode assembly 14 is housed in a bottomed cylindrical exterior housing can 16 is exemplified, but an exterior housing can of a battery is not limited to a cylindrical exterior housing can. A secondary battery according to the present disclosure may be, for example, a rectangular battery comprising a rectangular exterior housing can, or a coin-type battery comprising a coin-type exterior housing can, or may be a laminate battery comprising an exterior housing made of a laminate sheet including a metal layer and a resin layer. The electrode assembly is not limited to a wound type, and may be a stacked-type electrode assembly in which a plurality of positive electrodes and a plurality of negative electrodes are alternately stacked with separators interposed one by one between them.

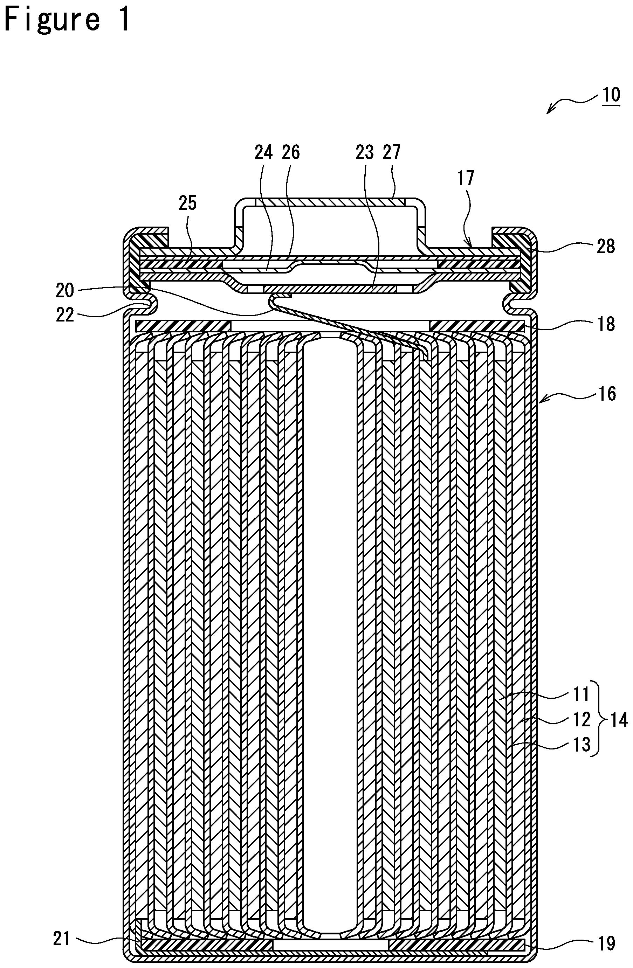

FIG. 1 is a sectional view of a secondary battery 10 of one example of embodiments. As illustrated in FIG. 1, the secondary battery 10 comprises the wound-type electrode assembly 14, an electrolyte, and the exterior housing can 16 that houses the electrode assembly 14 and the electrolyte. The electrode assembly 14 comprises a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metal container which includes an opening on one end side in an axial direction, and the opening of the exterior housing can 16 is capped with a sealing assembly 17. Hereinafter, for the convenience of explanation, the sealing assembly 17 side of the battery will be described as an upper side, and the bottom side of the exterior housing can 16 will be described as a lower side.

An aqueous electrolyte may be used as an electrolyte, but in the present embodiment, a non-aqueous electrolyte is used. The non-aqueous electrolyte includes a non-aqueous solvent, and an electrolyte salt dissolved in the non-aqueous solvent. Examples of the non-aqueous solvent include esters, ethers, nitriles, amides, and a mixed solvent containing two or more of these solvents. The non-aqueous solvent may contain a halogen-substituted solvent in which at least some hydrogen atoms of these solvents are replaced by halogen atoms such as fluorine. Examples of the non-aqueous solvents include ethylene carbonate (EC), ethyl methyl carbonate (EMC), and dimethyl carbonate (DMC), and a mixed solvent containing these solvents. For the electrolyte salt, for example, a lithium salt such as $LiPF_6$ is used.

The positive electrode 11, the negative electrode 12, and the separator 13 of the electrode assembly 14 each are band-shaped elongated member, and are spirally wound so as to be alternately stacked in a radial direction of the electrode assembly 14. The negative electrode 12 is formed to be one size larger than the positive electrode 11 in order to prevent precipitation of lithium. That is, the negative electrode 12 is formed to be longer in a longitudinal direction and a width direction (short-length direction) than the positive electrode 11. Two separators 13 are each formed to be at least one size larger than the positive electrode 11, and are disposed so as to interpose, for example, the positive electrode 11 therebetween. A porous sheet having ion permeability and an insulation property is used as the separator 13. The electrode assembly 14 includes a positive electrode lead 20 connected to the positive electrode 11 by welding or the like, and a negative electrode lead 21 connected to the negative electrode 12 by welding or the like.

Insulating plates 18 and 19 are disposed above and below the electrode assembly 14, respectively. In the example illustrated in FIG. 1, the positive electrode lead 20 extends toward the sealing assembly 17 side through a through hole in the insulating plate 18, and the negative electrode lead 21 extends toward the bottom side of the exterior housing can 16 along the outside of the insulating plate 19. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, serves as a positive electrode terminal. The negative electrode lead 21 is connected to an inner surface of the bottom of the exterior housing can 16 by welding or the like, and the exterior housing can 16 serves as a negative electrode terminal.

A gasket 28 is provided between the exterior housing can 16 and the sealing assembly 17 to ensure a sealing property inside the battery. The exterior housing can 16 has a grooved portion 22 formed by causing a part of a side wall to project inward and configured to support the sealing assembly 17. The grooved portion 22 is preferably formed annularly along a circumferential direction of the exterior housing can 16, and supports the sealing assembly 17 on its upper surface. The sealing assembly 17 is fixed to an upper portion of the exterior housing can 16 by the grooved portion 22 and an opening end of the exterior housing can 16 caulked to the sealing assembly 17.

The sealing assembly 17 has a structure in which the internal terminal plate 23, a lower vent member 24, an insulating member 25, an upper vent member 26, and the cap 27 are stacked in this order from the electrode assembly 14 side. Each member constituting the sealing assembly 17 has, for example, a disk shape or a ring shape, and members except for the insulating member 25 is electrically connected to each other. The lower vent member 24 and the upper vent member 26 are connected to each other at each of central portions thereof, and the insulating member 25 is interposed between circumferential edge portions of the vent members 24 and 26. If the internal pressure of the battery increases due to abnormal heat generation, the lower vent member 24 is deformed so as to push the upper vent member 26 upward toward the cap 27 side and ruptures, resulting in the disconnection of a current path between the lower vent member 24 and the upper vent member 26. If the internal pressure further increases, the upper vent member 26 ruptures, and gas is discharged from an opening of the cap 27.

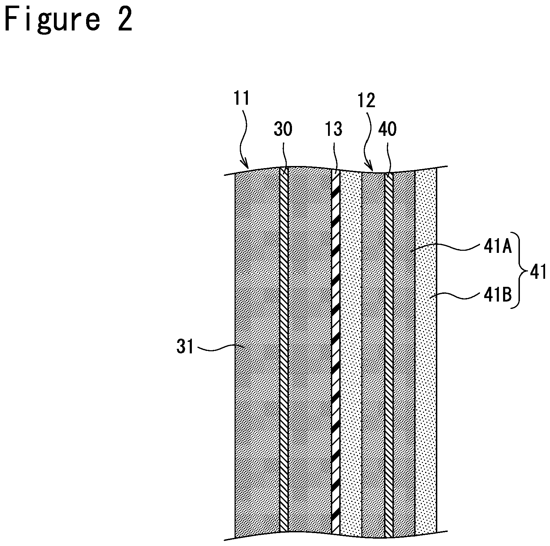

Hereinafter, the positive electrode 11 and the negative electrode 12 of the electrode assembly 14 will be described in detail with reference to FIG. 2. FIG. 2 is a diagram schematically illustrating a part of a cross section of the electrode assembly 14.

As illustrated in FIG. 2, the positive electrode 11 comprises a core 30, and a mixture layer 31 formed on the core 30. The mixture layer 31 of the positive electrode 11 has a single-layer structure. The negative electrode 12 comprises a core 40, and the mixture layer 41 formed on the core 40. The mixture layer 41 of the negative electrode 12 has a two-layer structure including a first mixture layer 41A, and a second mixture layer 41B disposed on the first mixture layer 41A. The first mixture layer 41A is disposed on a surface of the core 40, and the second mixture layer 41B is disposed in an outermost surface of the mixture layer 41. Note that the mixture layer 31 of the positive electrode 11 can have a two-layer structure similar to that of the negative electrode 12.

Two layers included in each mixture layer of the negative electrode 12 have different tortuosities, and the tortuosity of the second mixture layer 41B which is an upper layer located on the surface side of the mixture layer 41 is preferably smaller than the tortuosity of the first mixture layer 41A which is a lower layer located on the core 40 side of the mixture layer 41. Using the negative electrode 12 having such a two-layer structure makes it possible to greatly improve the cycle characteristics at the time of high-rate charging and discharging while maintaining high packing density of negative electrode active material particles. Note that other layers besides the mixture layer may be formed on the core within the range in which the object of the present disclosure is not vitiated. An example of other layers is a protective layer which contains inorganic particles, a conductive agent, and a binder, and is interposed between the core and the mixture layer.

In this specification, the tortuosity of the mixture layer is calculated by the following equations. $\tau$ indicates a tortuosity, f indicates a length of a path between surfaces facing each other in a thickness direction through which Medial Axis passes (hereinafter, may be referred to as a path length), and s indicates a length of a straight line connecting a start point and a finish point of the path of f (hereinafter, may be referred to as a straight line distance between the start and finish points). A sample to be evaluated for the tortuosity is in a fully discharged state.

$$\tau = f/s$$

The tortuosities of the first mixture layer and the second mixture layer can be calculated by the following equations.

$$\tau_1 = f_1/s_1$$

$$\tau_2 = f_2/s_2$$

($\tau_1$: Tortuosity of the first mixture layer, fi: Path length of the first mixture layer, si: Straight line distance between the start and finish points of the first mixture layer)

($\tau_2$: Tortuosity of the second mixture layer, $f_2$: Path length of the second mixture layer, $s_2$: Straight line distance between the start and finish points of the second mixture layer)

The above-described path length and straight line distance can be measured by the cross-section observation and image analysis of the mixture layer using a 3D scanning electron microscope (3D SEM, for example, Ethos NX-5000 manufactured by Hitachi High-Tech Corporation).

A specific method of calculating the tortuosity is as follows.

(1) A mixture material constructed into a three-dimensional structure is placed on a sample stage of 3D SEM, and serial section slicing and cross-section observation are alternately performed using 3D SEM. The observation is performed at an accelerating voltage of 5 kV. The obtained two-dimensional serial images are binarized by three-dimensional image analysis software (for example, EX FACT VR manufactured by Nihon Visual Science. Inc.), and are pieced together to construct a three-dimensional structure. The three-dimensional structure preferably has size of greater than or equal to 100 $\mu$m × 100 $\mu$m × 100 $\mu$m.

(2) Determination of a boundary between the first mixture layer and the second mixture layer

The three-dimensional structure image obtained in (1) is used to determine a boundary between regions having different voids in the thickness direction as a boundary line between the first mixture layer and the second mixture layer.

(3) Determination of $f_1$, $f_2$, $s_1$, and $s_2$ in the first mixture layer and the second mixture layer

The three-dimensional structure image obtained in (1) is divided into the first mixture layer and the second mixture layer at a ratio measured in (2), furthermore the voids extracted by binarization are thinned, and axes (Medeial Axes) passing through centers of the respective voids are determined. From the Medial Axes existing in a cube, a Medial Axis is extracted which passes through the cube in a direction perpendicular to the core surface, and a shortest path length in one path having branches is determined as a path length (fi, fz) of the mixture material.

(4) Calculation of the tortuosities of the first mixture layer and the second mixture layer

The tortuosity of each of the first mixture layer and the second mixture layer is calculated according to the above corresponding equation using the average path length ($f_1$, $f_2$) of each of the first mixture layer and the second mixture layer, which is measured in (3), and an average straight line distance ($s_1$, $s_2$) of the path, and then a ratio thereof, $\tau_2/\tau_1$ is calculated.

Hereafter, each of the positive electrode 11 and the negative electrode 12 will be further described in detail.

[Positive Electrode]

As described above, the positive electrode 11 comprises the core 30, and the mixture layer 31 formed on the core 30. Examples of the core 30 may include a foil of metal such as aluminum or an aluminum alloy, which is stable within a potential range of the positive electrode 11, and a film in which such a metal is disposed on a surface layer thereof. The mixture layer 31 contains a positive electrode active material, a conductive agent, and a binder, and is preferably provided on each surface of the core 30 except for a core exposed portion which is a portion to which the positive electrode lead is connected. The positive electrode 11 can be produced by applying a positive electrode mixture slurry including a positive electrode active material, a conductive agent, a binder, and the like on a surface of a core 30, drying the resulting coating film, and then compressing the coating film to form the mixture layer 31 on each surface of the core 30.

The thickness of the mixture layer 31 is, for example, greater than or equal to 50 $\mu$m and less than or equal to 150 $\mu$m on each side of the core 30. The packing density of the mixture layer 31 is, for example, greater than or equal to 3.3 g/cc, and preferably greater than or equal to 3.3 g/cc and less than or equal to 3.7 g/cc or greater than or equal to 3.5 g/cc and less than or equal to 3.7 g/cc. When the packing density of the mixture layer 31 falls within the above-described range, the secondary battery 10 with a high energy density can be achieved.

The mixture layer 31 includes a lithium transition metal composite oxide as the positive electrode active material. Examples of elements other than Li which are contained in the lithium transition metal composite oxide include Ni, Co, Mn, Al, B, Mg, Ti, V, Cr, Fe, Cu, Zn, Ga, Sr, Zr, Nb, In, Sn, Ta, W, Si, and P. The lithium transition metal composite oxide preferably contains at least Ni from the viewpoint of higher capacity, and the like.

One preferable example of the positive electrode active material is a composite oxide represented by the

general formula $Li_yNi_{(1-x)}M_xO_2$ (in the general formula, $0 \leq x \leq 0.2$, $0 < y \leq 1.2$, and M represents at least one element selected from the group consisting of Co, Al, Mn, Fe, Ti, Sr, Ca, and B). In particular, M preferably contains at least one selected from the group consisting of Co, Al, and Mn. A content of Ni may be greater than or equal to 85 mol% (in the formula, $0 < x \leq 0.15$) relative to a total molar amount of the elements other than Li and O which constitute the lithium transition metal composite oxide. The positive electrode active material includes a composite oxide represented by the general formula $Li_yNi_{(1-x)}M_xO_2$ (in the general formula, $0 < x \leq 0.12$, $0 < y \leq 1.2$, and M represents elements including at least Co and Al).

A volume-based median diameter (D50) of the positive electrode active material is, for example, greater than or equal to 3 $\mu$m and less than or equal to 30 $\mu$m, and preferably greater than or equal to 5 $\mu$m and less than or equal to 25 $\mu$m. The positive electrode active material may be a particle composed of one or a few primary particles, or a secondary particle formed by aggregation of a large number of primary particles. The D50 means a particle diameter at which the cumulative frequency reaches 50% from the smallest particle diameter in a volume-based particle size distribution, and is also referred to as a median diameter. The particle size distribution of a composite oxide (Z) can be measured using a laser diffraction particle size distribution measurement device (for example, MT3000II manufactured by microtracBEL Corporation) using water as a dispersion medium.

Examples of the conductive agent included in the mixture layer 31 may include carbon materials such as carbon black, acetylene black, Ketjen black, and graphite. A content of the conductive agent is preferably greater than or equal to 0.1% and less than or equal to 10% by mass, and more preferably greater than or equal to 0.2% and less than or equal to 5% by mass with respect to a mass of the mixture layer 31.

Examples of the binder included in the mixture layer 31 may include fluororesins such as polytetrafluoroethylene (PTFE) and polyvinylidene fluoride (PVDF), polyacrylonitrile (PAN), polyimide, acrylic resins, and polyolefin. These resins may be used in combination with cellulose derivatives such as carboxymethyl cellulose (CMC) or a salt thereof, polyethylene oxide (PEO), or the like. A content of the binder is, for example, greater than or equal to 0.1% and less than or equal to 5% by mass with respect to the mass of the mixture layer 31.

In an embodiment illustrated in FIG. 2, the mixture layer 31 of the positive electrode 11 has a single-layer structure, but may have a two-layer structure similar to that of the mixture layer 41 of the negative electrode 12. When the mixture layer 31 has the two-layer structure including a first mixture layer (lower layer) and a second mixture layer (upper layer), a ratio ($\tau_2/\tau_1$) of a tortuosity ($\tau_2$) of the second mixture layer to a tortuosity ($\tau_1$) of the first mixture layer is preferably less than 1.1, and more preferably satisfies $0.3 \leq (\tau_2/\tau_1) < 1$.

[Negative Electrode]

As described above, the negative electrode 12 comprises the core 40, and the mixture layer 41 formed on the core 40. Examples of the core 40 may include a foil of a metal such as copper or a copper alloy, which is stable within a potential range of the negative electrode 12, and a film in which such a metal is disposed on a surface layer thereof. The mixture layer 41 contains a negative electrode active material, a binder, and if necessary, a conductive agent, and is preferably provided on each surface of the core 40 except for a core exposed portion which is a portion to which the negative electrode lead is connected. A thickness of the mixture layer 41 is, for example, greater than or equal to 50 $\mu$m and less than or equal to 150 $\mu$m on each side of the core 40. The negative electrode 12 can be produced by applying a negative electrode mixture slurry including a negative electrode active material, a conductive agent, a binder, and the like on a surface of a core 40, drying the resulting coating film, and then compressing the coating film to form the mixture layer 41 on each surface of the core 40.

The mixture layer 41 includes graphite and a silicon material as the negative electrode active material. Using the graphite and the silicon material together makes it possible to increase the capacity while maintaining good cycle characteristics. A content of the silicon material is greater than or equal to 0.5% by mass, preferably greater than or equal to 2% by mass, and more preferably greater than or equal to 3% by mass with respect to a mass of the negative electrode active material. An upper limit of the content of the silicon material is, for example, 25% by mass, and preferably 20% by mass. One preferable example of the content of the silicon material is greater than or equal to 0.5% and less than or equal to 25% by mass, and more preferably greater than or equal to 2% and less than or equal to 20% by mass or greater than or equal to 3% and less than or equal to 15% by mass with respect to the mass of the negative electrode active material.

Examples of the graphite include natural graphite such as flake graphite, and artificial graphite such as massive artificial graphite, and graphitized mesophase carbon microbeads. The D50 of the graphite is preferably greater than or equal to 1 $\mu$m and less than or equal to 30 $\mu$m, and more preferably greater than or equal to 5 $\mu$m and less than or equal to 20 $\mu$m. As the negative electrode active material, the natural graphite and the artificial graphite may be used together, and two or more types of graphite having different D50 values may be also used in mixture.

Examples of the above-described silicon material include a silicon oxide phase, and a silicon material (hereinafter, referred to as "SiO") containing Si dispersed in the silicon oxide phase. The D50 of the silicon material is generally smaller than the D50 of graphite, and is, for example, greater than or equal to 1 $\mu$m and less than or equal to 15 $\mu$m.

SiO is a compound which has a sea island structure in which fine Si particles are approximately uniformly dispersed in a matrix of amorphous silicon oxide, and is represented by the general formula $SiO_x$ ($0 < x \leq 2$). The silicon oxide phase is composed of a group of particles that are finer than the Si particles. A content ratio of Si particles is preferably greater than or equal to 35% and less than or equal to 75% by mass relative to a total mass of SiO from the viewpoint of achieving both of the battery capacity and the cycle characteristics.

An average particle diameter of the Si particles dispersed in the silicon oxide phase is, for example, less than or equal to 500 nm, and preferably less than or equal to 200 nm or less than or equal to 50 nm before charging and discharging. After charging and discharging, it is, for example, less than or equal to 400 nm or less than or equal to 100 nm. The average particle diameter of the Si particles is measured by observing cross sections of SiO particles using an SEM or a transmission electron microscope (TEM) as an average value of the longest diameters of 100 Si particles.

On the surface of the SiO particles, a conductive layer composed of a material having a high conductivity may be formed. Suitable examples of the conductive layer include carbon coating made of a carbon material. A thickness of the conductive layer is preferably greater than or equal to 1 nm and less than or equal to 200 nm, and more preferably greater than or equal to 5 nm and less than or equal to 100 nm in consideration of ensuring the conductivity and the diffusibility of Li ions into the particles.

Examples of the binder included in the mixture layer 41, like in the positive electrode 11, may include fluororesins, PAN, polyimide, acrylic resins, and polyolefin, and in particular, a styrene-butadiene rubber (SBR) is preferably used. In the mixture layer 41, CMC or a salt thereof, polyacrylic acid (PAA) or a salt thereof, polyvinyl alcohol, or the like may be preferably included. In particular, SBR may be preferably used in combination with CMC or a salt thereof, or PAA or a salt thereof. The content of the binder is, for example, greater than or equal to 0.1% and less than or equal to 5% by mass with respect to the mass of the mixture layer 41.

The mixture layer 41 preferably includes a conductive agent. Examples of the conductive agent, like in the positive electrode 11, may include particulate carbons such as carbon black, acetylene black, Ketjen black, and graphite, but the conductive agent preferably includes at least fibrous carbons. Adding the fibrous carbons to the mixture layer 41 makes it possible to suppress generation of the active material particles isolated from a conductive path, and the effect of improving the cycle characteristics becomes more conspicuous. A content of the conductive agent is preferably greater than or equal to 0.1% and less than or equal to 10% by mass, and more preferably greater than or equal to 0.2% and less than or equal to 5% by mass with respect to the mass of the mixture layer 41. Note that, as the conductive agent, the particulate carbons and the fibrous carbons may be used in combination.

Examples of the fibrous carbon include carbon nanotubes (CNT), carbon nanohorns (CNH), carbon fibers (CNF), vapor grown carbon fibers, carbon fibers by electro-spinning, polyacrylonitrile (PAN)-based carbon fibers, and pitch-based carbon fibers. These may be used alone or used as a mixture of two or more thereof. In particular, the CNT is preferably used.

A layer structure of the CNT is not limited to a particular structure, and may be any of single-walled carbon nanotubes (SWCNT) and multi-walled carbon nanotubes (MWCNT), but the SWCNT is preferably used from the viewpoint of improving the conductivity of the mixture layer 41. An average fiber length of the CNT is preferably greater than or equal to 0.1 $\mu$m and less than or equal to 40 $\mu$m, more preferably greater than or equal to 0.3 $\mu$m and less than or equal to 20 $\mu$m, and especially preferably greater than or equal to 0.5 $\mu$m and less than or equal to 5 $\mu$m. A diameter of the CNT is, for example, greater than or equal to 1 nm and less than or equal to 100 nm.

The mixture layer 41 has the two-layer structure including the first mixture layer 41A and the second mixture layer 41B, and contains graphite and a silicon material as the negative electrode active material, as described above. A ratio ($\tau_2/\tau_1$) of a tortuosity ($\tau_2$) of the second mixture layer 41B to a tortuosity ($\tau_1$) of the first mixture layer 41A is less than 1.1. When the ratio ($\tau_2/\tau_1$) of the tortuosity is greater than or equal to 1.1, for example, the permeation of the electrolyte into the mixture layer 41 is degraded, and the cycle characteristics at the time of high-rate charging and discharging tend to deteriorate.

The ratio ($\tau_2/\tau_1$) of the tortuosity preferably satisfies $0.3 \leq (\tau_2/\tau_1) < 1$, more preferably $0.4 \leq (\tau_2/\tau_1) \leq 0.9$, and especially preferably $0.5 \leq (\tau_2/\tau_1) \leq 0.8$ or $0.6 \leq (\tau_2/\tau_1) \leq 0.8$. When the tortuosity ratio satisfies the above-described relationship, the effect of improving the cycle characteristics at the time of high-rate charging and discharging becomes more conspicuous. The tortuosity ($\tau_1$) of the first mixture layer 41A is, for example, greater than or equal to 1.5 and less than or equal to 5.0, and preferably greater than or equal to 2.0 and less than or equal to 4.0. The tortuosity ($\tau_2$) of the second mixture layer 41B is, for example, greater than or equal to 1.2 and less than or equal to 4.5, and preferably greater than or equal to 1.5 and less than or equal to 3.0.

A thickness ratio between the first mixture layer 41A and the second mixture layer 41B may be 1:1, and a thickness of the second mixture layer 41B may be larger than a thickness of the first mixture layer 41A, but it is preferable to satisfy the thickness of the first mixture layer 41A $\geq$ the thickness of the second mixture layer 41B. The thickness of the first mixture layer 41A is preferably greater than or equal to 50% and less than or equal to 90% of the thickness of the mixture layer 41, more preferably greater than or equal to 50% and less than or equal to 85%, and especially preferably greater than or equal to 50% and less than or equal to 80% or greater than or equal to 60% and less than or equal to 80%. The thickness of the second mixture layer 41B is preferably greater than or equal to 10% and less than or equal to 50% of the thickness of the mixture layer 41, more preferably greater than or equal to 15% and less than or equal to 50%, and especially preferably greater than or equal to 20% and less than or equal to 50% or greater than or equal to 20% and less than or equal to 40%. When the thickness of each mixture layer falls within the above-described range, the effect of improving the cycle characteristics becomes more conspicuous.

A porosity ratio between the first mixture layer 41A and the second mixture layer 41B may be 1:1, and the porosity of the first mixture layer 41A may be larger than the porosity of the second mixture layer 41B, but it is preferable to satisfy the porosity of the first mixture layer 41A ≤ the porosity of the second mixture layer 41B. The porosity of the first mixture layer 41A is preferably greater than or equal to 10% and less than or equal to 40%, and more preferably greater than or equal to 20% and less than or equal to 30%. The porosity of the second mixture layer 41B is preferably greater than or equal to 20% and less than or equal to 50%, and more preferably greater than or equal to 30% and less than or equal to 40%. When the porosity of each mixture layer falls within the above-described range, the effect of improving the cycle characteristics becomes more conspicuous.

The packing density of the mixture layer 41 is, for example, greater than or equal to 1.2 g/cc, and preferably greater than or equal to 1.3 g/cc and less than or equal to 1.7 g/cc. When the packing density of the mixture layer 41 falls within the above-described range, the secondary battery 10 with a high energy density can be achieved. The packing density of each mixture layer is not limited to a particular value, and it is only required that the overall packing density of the mixture layer 41 falls within the above-described range, but the packing density of the first mixture layer 41A is normally larger than the packing density of the second mixture layer 41B.

The content of the conductive agent in the first mixture layer 41A may be equal to the content of the conductive agent in the second mixture layer 41B, and the content ($\theta_1$) of the conductive agent in the first mixture layer 41A may be larger than the content ($\theta_2$) of the conductive agent in the second mixture layer 41B, but it is preferable to satisfy $\theta_1 < \theta_2$. Since the tortuosity ($\tau_2$) and packing density of the second mixture layer 41B are likely to smaller than those of the first mixture layer 41A, it is preferable to increase an addition amount of the conductive agent to ensure good conductive path. On the other hand, as for the first mixture layer 41A, the addition amount of the conductive agent is reduced to relatively increase an amount of the active material, which makes it possible to increase the capacity.

The content ($\theta_2$) of the conductive agent, especially, fibrous carbons in the second mixture layer 41B is preferably larger than the content ($\theta_1$) of the fibrous carbons in the first mixture layer 41A. The ratio ($\theta_2/\theta_1$) of the content ($\theta_2$) to the content ($\theta_1$) preferably satisfies $1 < (\theta_2/\theta_1) \le 8$, and more preferably satisfies $2 \le (\theta_2/\theta_1) \le 6$. In this case, the effect of improving the cycle characteristics at the time of high-rate charging and discharging becomes more conspicuous.

If the above-described ratio ($\tau_2/\tau_1$) of the tortuosity, and the like can be satisfied, the constituent materials of the first mixture layer 41A and the second mixture layer 41B may be the same or different. In each mixture layer, the ratio ($\tau_2/\tau_1$) of the tortuosity can be also controlled to fall within an intended target range, by changing the compressive force in a rolling step. It is also possible to form the first mixture layer 41A on the surface of the core 40 and perform a first rolling step, and then form the second mixture layer 41B on the first mixture layer 41A and perform a second rolling step. At this time, the compressive force of the second rolling step is made smaller than the compressive force of the first rolling step.

In each mixture layer, the compressive force in the rolling step of the mixture layer may be changed, alternatively or in addition thereto, the graphite having the substantially same composition and different D50 values may be used. For example, the ratio ($\tau_2/\tau_1$) of the tortuosity can be also controlled to fall within an intended target range, by adjusting a mixture ratio of two types of graphite particles having different D50 values or adjusting a mixture ratio of the natural graphite and the artificial graphite.

EXAMPLES

The present disclosure will be further described below with Examples, but the present disclosure is not limited to these Examples.

<Example 1>

[Production of Positive Electrode]

A lithium transition metal composite oxide represented by $LiNi_{0.88}Co_{0.09}Al^{**}_{0.03}O_2$ was used as a positive electrode active material. The positive electrode active material, acetylene black, and polyvinylidene fluoride were mixed together at a solid content mass ratio of 100:1:1, so that a positive electrode mixture slurry was prepared using N-methyl-2-pyrrolidone (NMP) as a dispersion medium. Then, the positive electrode mixture slurry was applied on each surface of a positive electrode core made of an aluminum foil, the resulting coating film was dried, and then the coating film was compressed using a roller. The positive electrode core was cut into strips having a predetermined width, and a positive electrode was obtained in which a positive electrode mixture layer was formed on each surface of the positive electrode core.

The mixture layer of the produced positive electrode had a single-layer structure, and the tortuosity was 1.7, the porosity was 23%, and the thickness of the entire electrode including the core and the mixture layer on each surface of the core was 150 $\mu$m. Note that the tortuosity, porosity, and thickness of the mixture layer are measured by the above-described methods.

[Preparation of Negative Electrode Mixture Slurry]

A mixture of graphite and a silicon material represented by SiO in a mass ratio of 97:3 was used as a negative electrode active material. A mixture of natural graphite and artificial graphite was used as graphite. The negative electrode active material, a dispersion of styrene-butadiene rubber (SBR), carboxymethyl cellulose sodium salt, polyacrylic acid, and single-walled carbon nanotubes were mixed together at a solid content mass ratio of 100: 1: 1: 1:0.1, so that a negative electrode mixture slurry was prepared using water as the dispersion medium. Note that two types of first and second negative electrode mixture slurries were prepared which have different mixing ratios of the natural graphite and the artificial graphite.

A first negative electrode mixture slurry was applied on each surface of a negative electrode core made of a copper foil, the resulting first coating film was dried, the first coating film was rolled at a predetermined pressure, and then a second negative electrode mixture slurry was applied on the first coating film to form a second coating film. The second coating film was dried, and then the first and second coating films were compressed using a roller. The negative electrode core was cut into strips having a predetermined width, and a negative electrode was obtained in which a negative electrode mixture layer was formed on each surface of the negative electrode core.

The mixture layer of the produced negative electrode had a multi-layer (two-layer) structure, and the tortuosity was 2.5, the thickness of the entire electrode including the core and the mixture layer on each surface of the core was 150 $\mu$m, and the packing density was 1.5 g/cc. The tortuosity ($\tau_1$) of the first mixture layer (layer A) on the negative electrode core side was 3.5, and the porosity thereof was 24%, the tortuosity ($\tau_2$) of the second mixture layer (layer B) on the surface side of the mixture layer was 2.5, and the porosity thereof was 33%. The ratio ($\tau_2/\tau_1$) of the tortuosity of each mixture layer was 0.7, and the thickness ratio was 1:1. The physical properties of the negative electrode are shown in Table 1.

[Preparation of Non-Aqueous Electrolytic Solution]

Ethylene carbonate and diethyl carbonate were mixed together in a volume ratio of 1:1, and then fluoroethylene carbonate was added thereto to achieve a concentration of 2% by mass. To the mixed solvent was added $LiPF_6$ to achieve a concentration of 1 mol/L, to thereby obtain a non-aqueous electrolytic solution.

[Production of Test Cell]

The above-described positive electrode to which an aluminum lead was welded and the above-described negative electrode to which a nickel lead was welded were spirally wound with a separator interposed therebetween, to thereby prepare a wound-type electrode assembly. The electrode assembly was housed in a bottomed cylindrical exterior housing can having a diameter of 18 mm and a height of 65 mm, the above-described non-aqueous electrolytic solution was poured into the exterior housing can, and then an opening of the exterior housing can was sealed by a sealing assembly via a gasket, to thereby obtain a test cell X1 (non-aqueous electrolyte secondary battery).

<Examples 2 to 9, 17 and 18>

A negative electrode and test cells X2 to X9, X17, X18 were produced in the same manner as in Example 1 except that the compressive force in a rolling step of each mixture layer was changed and an added amount of the silicon material was changed to prepare two types of negative electrode mixture slurries so that the ratio ($\tau_2/\tau_1$) of the tortuosity of each mixture layer and a content of the silicon material with respect to the mass of the negative electrode active material became values shown in Table 1.

<Examples 10, 11, 19, and 20)

A negative electrode and test cells X10, X11, X19, X20 were produced in the same manner as in Example 1 except that applied amounts of the two types of negative electrode mixture slurries were changed so that the thickness ratio of each mixture layer became a value shown in Table 1.

<Examples 12 to 16)

A negative electrode and test cells X12 to X16 were produced in the same manner as in Example 1 except that an added amount of CNT was changed to prepare the two-types of negative electrode mixture slurries so that a CNT content ratio ($\theta2/\theta1$) in each mixture layer became a value shown in Table 1.

<Comparative Example 1>

A test cell Y1 was produced in the same manner as in Example 1 except that in production of the negative electrode, the compressive force in a rolling step of the mixture layer was changed to form a negative electrode mixture layer having a single-layer structure so that the tortuosity of the negative electrode mixture layer became 2.5.

<Comparative Example 2>

A test cell Y2 was produced in the same manner as in Example 1 except that in production of the negative electrode, a negative electrode mixture layer having a single-layer structure was formed using a second negative electrode mixture slurry.

[High-Rate, Cycle Test]

Each of the produced test cells was subjected to a constant current charging at the current of 1C until the battery voltage became 4.2 V. Then, each test cell was subjected to a constant current discharging at the current of 1C until the battery voltage became 2.5 V. The charging and discharging cycle was repeated 150 cycles, and the capacity retention rate was measured by the following equation. Evaluation results are shown in Table 1.

Capacity retention rate (%) = (150th-cycle discharge capacity/1st-cycle discharge capacity) $\times$ 100

[Table 1]

| | Electrode plate structure | Electrode plate tortuosity | $\tau2/\tau1$ | Si amount (% by mass) | CNT $\theta2/\theta1$ | Thickness ratio (%) | | Capacity retention rate (%) |
|---|---|---|---|---|---|---|---|---|
| | | | | | | Layer A | Layer B | |
| X1 | Multilayer | 2.5 | 0.7 | 3 | 1 | 50 | 50 | 95 |
| X2 | Multilayer | 2.5 | 0.3 | 3 | 1 | 50 | 50 | 93 |
| X3 | Multilayer | 2.5 | 0.95 | 3 | 1 | 50 | 50 | 91 |
| X4 | Multilayer | 2.5 | 0.7 | 10 | 1 | 50 | 50 | 90 |
| X5 | Multilayer | 2.5 | 0.3 | 10 | 1 | 50 | 50 | 88 |
| X6 | Multilayer | 2.5 | 0.95 | 10 | 1 | 50 | 50 | 85 |
| X7 | Multilayer | 2.5 | 0.7 | 20 | 1 | 50 | 50 | 85 |
| X8 | Multilayer | 2.5 | 0.3 | 20 | 1 | 50 | 50 | 83 |
| X9 | Multilayer | 2.5 | 0.95 | 20 | 1 | 50 | 50 | 82 |
| X10 | Multilayer | 2.5 | 0.7 | 10 | 1 | 65 | 35 | 92 |
| X11 | Multilayer | 2.5 | 0.7 | 10 | 1 | 80 | 20 | 88 |
| X12 | Multilayer | 2.5 | 0.7 | 10 | 3 | 50 | 50 | 96 |
| X13 | Multilayer | 2.5 | 0.7 | 10 | 5 | 50 | 50 | 95 |
| X14 | Multilayer | 2.5 | 0.7 | 10 | 8 | 50 | 50 | 92 |

(continued)

| | Electrode plate structure | Electrode plate tortuosity | $\tau 2/\tau 1$ | Si amount (% by mass) | CNT $\theta 2/\theta 1$ | Thickness ratio (%) | | Capacity retention rate (%) |
|---|---|---|---|---|---|---|---|---|
| | | | | | | Layer A | Layer B | |
| X15 | Multilayer | 2.5 | 0.7 | 10 | 0.8 | 50 | 50 | 80 |
| X16 | Multilayer | 2.5 | 0.7 | 10 | 10 | 50 | 50 | 86 |
| X17 | Multilayer | 2.5 | 0.25 | 10 | 1 | 50 | 50 | 80 |
| X18 | Multilayer | 2.5 | 1.05 | 10 | 1 | 50 | 50 | 75 |
| X19 | Multilayer | 2.5 | 0.7 | 10 | 1 | 85 | 15 | 85 |
| X20 | Multilayer | 2.5 | 0.7 | 10 | 1 | 40 | 60 | 67 |
| Y1 | Single layer | 2.5 | - | 10 | - | - | - | 50 |
| Y2 | Single layer | 2.0 | - | 10 | - | - | - | 40 |

As shown in Table 1, as compared with the test cells in Comparative Examples, all test cells in Examples have higher capacity retention rate after the high-rate cycle test and more excellent cycle characteristics at the time of high-rate charging and discharging. In the case where the negative electrode having a mixture layer with a single-layer structure is used (Comparative Examples 1, 2), the capacity greatly decreases in the high-rate cycle test.

In the test cells of Examples, when the ratio ($\tau_2/\tau_1$) of the tortuosity is greater than or equal to 0.3 and less than or equal to 1, the effect of improving the cycle characteristics became more conspicuous. When the thickness of the B layer was greater than or equal to 15% and less than or equal to 50% with respect to the thickness of the mixture layer, and especially greater than or equal to 35% and less than or equal to 50%, the effect of improving the cycle characteristics became more conspicuous. When the CNT content ratio ($\theta 2/\theta 1$) in each mixture layer was greater than or equal to 3 and less than or equal to 8, and especially greater than or equal to 3 and less than or equal to 5, the effect of improving the cycle characteristics became more conspicuous.

REFERENCE SIGNS LIST

10 Secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30, 40 Core, 31, 41 Mixture layer, 41B First mixture layer, 41B Second mixture layer

**Claims**

1. A negative electrode for a secondary battery, comprising:

   a core; and
   a mixture layer formed on the core,
   wherein the mixture layer includes a first mixture layer, and a second mixture layer disposed on the first mixture layer, and contains graphite and a silicon material as an active material, and a content of the silicon material is greater than or equal to 0.5% by mass, and
   a ratio ($\tau_2/\tau_1$) of a tortuosity ($\tau_2$) of the second mixture layer to a tortuosity ($\tau_1$) of the first mixture layer is less than 1.1.

2. The negative electrode for a secondary battery according to claim 1, wherein
   a ratio ($\tau_2/\tau_1$) of a tortuosity ($\tau_2$) of the second mixture layer to a tortuosity ($\tau_1$) of the first mixture layer satisfies $0.3 \leq (\tau_2/\tau_1) < 1$.

3. The negative electrode for a secondary battery according to claim 1 or 2, wherein
   the mixture layer contains a conductive agent.

4. The negative electrode for a secondary battery according to claim 3, wherein the conducive agent includes at least fibrous carbon.

5. The negative electrode for a secondary battery according to claim 3 or 4, wherein a content ($\theta$2) of the conductive agent in the second mixture layer is larger than a content ($\theta$1) of the conductive agent in the first mixture layer.

6. The negative electrode for a secondary battery according to claim 5, wherein a ratio ($\theta$2/$\theta$1) of the content ($\theta$2) to the content ($\theta$1) satisfies $1 < (\theta2/\theta1) \leq 8$.

7. The negative electrode for a secondary battery according to any one of claims 1 to 6, wherein

a thickness of the first mixture layer is greater than or equal to 50% and less than or equal to 80% with respect to a thickness of the mixture layer, and
a thickness of the second mixture layer is greater than or equal to 20% and less than or equal to 50% with respect to the thickness of the mixture layer.

8. A secondary battery comprising: the negative electrode according to any one of claims 1 to 7, a positive electrode, and an electrolyte.

# Figure 1

# Figure 2

## INTERNATIONAL SEARCH REPORT

| International application No. |
| --- |
| **PCT/JP2022/035117** |

### A. CLASSIFICATION OF SUBJECT MATTER

*H01M 4/133*(2010.01)i; *H01M 4/13*(2010.01)i; *H01M 4/134*(2010.01)i; *H01M 4/36*(2006.01)i; *H01M 4/62*(2006.01)i
FI:  H01M4/133; H01M4/13; H01M4/134; H01M4/36 E; H01M4/62 Z

According to International Patent Classification (IPC) or to both national classification and IPC

### B. FIELDS SEARCHED

Minimum documentation searched (classification system followed by classification symbols)

H01M4/133; H01M4/13; H01M4/134; H01M4/36; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2015-37008 A (TOYOTA MOTOR CORP) 23 February 2015 (2015-02-23) claims, paragraphs [0022]-[0026], test examples 2-6 | 1, 3-4, 7-8 |
| A | | 2, 5-6 |
| A | KEHRWALD, Dirk et al. Local Tortuosity Inhomogeneities in a Lithium Battery Composite Electrode. Journal of The Electrochemical Society. vol. 158, no. 12, 04 November 2011, pp. A1393-A1399 in particular, fig. 8 | 1-8 |
| A | WO 2021/132114 A1 (SANYO ELECTRIC CO., LTD.) 01 July 2021 (2021-07-01) | 1-8 |

☐ Further documents are listed in the continuation of Box C.        ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **09 November 2022** | **29 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

15

## INTERNATIONAL SEARCH REPORT
**Information on patent family members**

International application No.

**PCT/JP2022/035117**

| Patent document cited in search report | | | Publication date (day/month/year) | Patent family member(s) | Publication date (day/month/year) |
|---|---|---|---|---|---|
| JP | 2015-37008 | A | 23 February 2015 | (Family: none) | |
| WO | 2021/132114 | A1 | 01 July 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019003835 A